Europäisches Patentamt

European Patent Office

Office européen des brevets

(11) Veröffentlichungsnummer: **0 299 368**
**A1**

## (12) EUROPÄISCHE PATENTANMELDUNG

(21) Anmeldenummer: 88110902.9

(22) Anmeldetag: 08.07.88

(51) Int. Cl.4: **C08J 9/14 , C08L 25/00**

(30) Priorität: 15.07.87 DE 3723301

(43) Veröffentlichungstag der Anmeldung:
18.01.89 Patentblatt 89/03

(84) Benannte Vertragsstaaten:
**BE DE FR GB IT NL SE**

(71) Anmelder: **BASF Aktiengesellschaft**
**Carl-Bosch-Strasse 38**
**D-6700 Ludwigshafen(DE)**

(72) Erfinder: **Weber, Reinhold**
**An der Steinernen Brücke 11**
**D-6704 Mutterstadt(DE)**
Erfinder: **Zuern, Ludwig, Dr.**
**Halsbergstrasse 2a**
**D-6702 Bad Dürkheim(DE)**
Erfinder: **Weilbacher, Manfred, Dr.**
**Taunusstrasse 27**
**D-6710 Frankenthal(DE)**

(54) Verfahren zur Herstellung von geschlossenzelligen Schaumstoffen mit hoher Druckfestigkeit.

(57) Geschlossenzellige Schaumstoffe mit hoher Druckfestigkeit werden erhalten durch Extrusion eines Gemisches aus einem Styrolpolymerisat und 8 bis 16 Gew.% eines Treibmittelgemisches, enthaltend 2 bis 20 Gew.% Ethylchlorid, 2 bis 20 Gew.% Kohlendioxid, 20 bis 80 Gew.% Dichlordifluormethan und 10 bis 60 Gew.% Monochlordifluormethan.

EP 0 299 368 A1

EP 0 299 368 A1

## Verfahren zur Herstellung von geschlossenzelligen Schaumstoffen mit hoher Druckfestigkeit

Gegenstand der Erfindung ist ein Verfahren zur Herstellung von geschlossenzelligen Schaumstoffen mit hoher Druckfestigkeit durch Extrusion eines Gemisches aus einem Styrolpolymerisat, einem Treibmittel und gegebenenfalls üblichen Zusatzstoffen.

Für die Herstellung von Schaumstoffen auf Basis von Styrolpolymerisaten ist eine Vielzahl von Treibmitteln vorgeschlagen worden. Bevorzugt wird Methylchlorid verwendet. Wegen seiner Toxizität sind jedoch extreme Vorsichtsmaßnahmen sowohl bei der Herstellung als auch bei Nachlagerung des Schaumstoffs erforderlich. Der Schaumstoff zeigt zudem bei erhöhten Temperaturen ein beträchtliches Schwindungsverhalten. Bei Verwendung von Chlorfluorkohlenwasserstoffen, wie Dichlordifluormethan, als Treibmittel erhält man Schaumstoffe, die sich bei erhöhten Temperaturen ausdehnen. Gemische aus etwa gleichen Teilen Methylchlorid und Dichlordifluormethan führen zwar zu dimensionsstabilen Schaumstoffen, wegen der Toxidität des Methylchlorids verbietet sich jedoch ihr Einsatz. Ersetzt man Methylchlorid durch das wesentlich weniger toxische Ethylchlorid, so entsteht ein relativ weicher Schaum, der eine ungenügende Druckfestigkeit aufweist. Auch Kohlendioxid ist bereits als Treibmittel empfohlen worden. Sein Einsatz führt jedoch zu offenzelligen Schaumstoffen, die ein hohes Wasseraufnahmevermögen besitzen.

Die Aufgabe der Erfindung besteht darin, ein Verfahren zur Herstellung von Schaumstoffen als Styrolpolymerisaten aufzuzeigen, bei dem keine toxischen Treibmittel verwendet werden und das zu Schaumstoffen mit geschlossenen Zellen führt, die nur ein geringes Wasseraufnahmevermögen besitzen, die dimensionsstabil sind und eine hohe Druckfestigkeit und Wärmeformbeständigkeit aufweisen. Weiterhin ist es Aufgabe der Erfindung, den Gehalt an Dichlorfluormethan im Schaumstoff zu reduzieren, da dieser Stoff angeblich in der Atmosphäre die Wirksamkeit der Ozonschicht als Solarschirm vermindert.

Die Aufgabe der Erfindung wird gelöst durch die Verwendung eines Treibmittelgemisches enthaltend 2 bis 20 Gew.% Ethylenchlorid, 2 bis 20 Gew.% Kohlendioxid, 20 bis 80 Gew.% Dichlordifluormethan und 10 bis 60 Gew.-% Monochlordifluormethan.

Gegenstand der Erfindung ist somit ein Verfahren zur Herstellung von geschlossenzelligen Schaumstoffen mit hoher Druckfestigkeit durch Extrusion eines Gemisches aus einem Styrolpolymerisat und 8 bis 16 Gew.%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

a) 2 bis 20 Gew.% Ethylchlorid

b) 2 bis 20 Gew.% Kohlendioxid

c) 20 bis 80 Gew.% Dichlordifluormethan und

d) 10 bis 60 Gew.% Monochlordifluromethan

enthält.

Styrolpolymerisate im Sinne dieser Erfindung sind Polystyrol und Mischpolymerisaten des Styrols, die mindestens 50 Gew.% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Das Treibmittel wird in einer Menge von 8 bis 16 Gew.%, vorzugsweise 10 bis 14 Gew.%, bezogen auf das Styrolpolymerisat, verwendet. Es enthält 2 bis 20 Gew.%, vorzugsweise 5 bis 15 Gew.% Ethylchlorid, 2 bis 20 Gew.%, vorzugsweise 5 bis 15 Gew.% Kohlendioxid, 20 bis 80 Gew.%, vorzugsweise 40 bis 60 Gew.% Dichlordifluormethan und 10 bis 60 Gew.%, vorzugsweise 20 bis 40 Gew.% Monochlordifluormethan. Die optimale Zusammensetzung läßt sich leicht durch Vorversuche ermitteln. Erhöht man den Gehalt an Ethylchlorid im Treibmittelgemisch auf über 20 Gew.%, so wird der Schaumstoff weicher und seine Druckfestigkeit ist unbefriedigend. Erhöht man den Gehalt an Kohlendioxid im Treibmittelgemisch auf über 20 %, so nimmt der Gehalt an offenen Zellen stark zu und das Wasseraufnahmevermögen des Schaumstoffs steigt an. Erhöht man den Gehalt an Dichlordifluormethan auf über 80 Gew.%, so ist die Dimensionsstabilität des Schaumstoffs bei erhöhter Temperatur unbefriedigend. Erhöht man den Gehalt an Monochlordifluormethan im Gemisch auf über 60 %, so zeigt der Schaumstoff bei der Alterung ein unbefriedigendes Wärmedämmverhalten.

Als übliche Zusatzstoffe können dem Styrolpolymerisat-Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Herstellung der Schaumstoffe erfolgt erfindungsgemäß in an sich bekannter Weise durh Extrusion. In einem Extruder wird das durch Erwärmen plastifizierte Styrolpolymerisat mit dem Treibmittelgemisch und

2

den Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Die Erfindung wird anhand der folgenden Beispiele erläutert. Die in den Beispielen genannten Teile sind Gewichtsteile.

Beispiele 1 bis 7 und Vergleichsbeispiele 8 und 9

100 Teile Polystyrol mit einem Schmelzindex von 5,0, 1,5 Teile Hexabromcyclododecan als Flammschutzmittel und 1 Teil Talkum zur Regelung der Zellgröße wurden einem Extruder mit einem inneren Schneckendurchmesser von 120 mm kontinuierlich zugeführt. Durch eine in den Extruder angebrachte Einlaßöffnung wurde gleichzeitig ein aus 6 Teilen Dichlordifluormethan, 1 Teil $CO_2$, 3 Teilen Chlordifluormethan und 1 Teile Chlorethan bestehendes Treibmittelgemisch in den Extruder kontinuierlich eingedrückt. Das in dem Extruder gleichmäßig geknetete Gel wurde dann nach einer Verweilzeit von 15 Minuten auf eine Austrittstemperatur von 105°C gekühlt und durch eine 300 mm breite und 1,5 mm weite Düse in die Atmosphäre extrudiert. Der Schaum wurde durch eine mit dem Extruder verbundenen Formkanal geführt, wobei eine geschäumte Polystyrolplatte mit einer Querschnittsgröße von 650 mm x 50 mm entstand. Das geschäumte Produkt wurde in Stücke mit einer Querschnittsfläche von 600 mm x 50 mm und einer Länge von 1250 mm geschnitten. Geprüft wurden die Proben nach einer Ablagerzeit von 30 Tagen. Der in der Tabelle 1 angegebene λ-Wert wurde nach 2jähriger Lagerzeit ermittelt. Die weiteren Beispiele wurden stets unter gleichen Bedingungen gefahren, geändert wurde lediglich das Treibmittelgemisch, das für jedes Beispiel in der Tabelle 1 aufgeführt ist.

Gemessen wurde der λ-Wert (Wärmeleitzahl) nach DIN 52 612, die Schaumstoffdichte nach DIN 53 420, die Zellgröße nach ASTM D 3842-69, die geschlossenen Zellen nach DIN-ISO 4590, die Wasseraufnahme an ganzen Platten nach DIN 53 434, die Druckfestigkeit nach DIN 53 421 und die Dimensionsstabilität nach DIN 534 431.

TABELLE 1

| Beispiel | Treibmittelmenge Gew.% | $CCl_2F_2$ Gew.% | $CO_2$ Gew.% | $CHClF_2$ Gew.% | $C_2H_5Cl$ Gew.% | Wärmeleitzahl λ-wert [W/m.K] |
|---|---|---|---|---|---|---|
| 1 | 11 | 6 | 1 | 3 | 1 | 0,0285 |
| 2 | 8 | 2 | 1,5 | 3 | 1,5 | 0,0395 |
| 3 | 13 | 2,7 | 0,5 | 7,8 | 2,0 | 0,0345 |
| 4 | 16 | 12,8 | 0,5 | 1,7 | 1,0 | 0,0254 |
| 5 | 10 | 4,7 | 1,5 | 3,0 | 0,8 | 0,0310 |
| 6 | 12 | 6,5 | 1,0 | 4,0 | 0,5 | 0,0290 |
| 7 | 9 | 1,8 | 0,9 | 5,4 | 0,9 | 0,0390 |
| 8 (Vergleich) | 10 | 1,5 | 1,0 | 4,0 | 3,5 | 0,0394 |
| 9 (Vergleich) | 16 | 12,8 | 0,5 | 2,7 | 0 | 0,0294 |

TABELLE 1 Forts.

| Beispiel | Schaumstoffdichte g/l | Zellgröße mm | geschlossene Zellen % | Wasseraufnahme Vol.% | Druckfestigkeit $[N/mm_2]$ | Dimensionsstabilität in % | | |
|---|---|---|---|---|---|---|---|---|
| | | | | | | Länge | Breite | Dicke |
| 1 | 34,7 | 0,21 | 98,5 | 0,09 | 0,284 | +1 | -0,3 | -0,1 |
| 2 | 32,8 | 0,37 | 93,0 | 0,14 | 0,196 | 0 | -3 | -2 |
| 3 | 33,6 | 0,23 | 96,5 | 0,09 | 0,230 | +1,2 | -0,1 | -0,3 |
| 4 | 37,4 | 0,15 | 99,0 | 0,07 | 0,375 | +5 | +4,8 | +4 |
| 5 | 35,0 | 0,25 | 95,6 | 0,11 | 0,270 | +0,3 | -2 | -1 |
| 6 | 35,2 | 0,23 | 97,7 | 0,09 | 0,290 | +1 | +0,3 | +0,2 |
| 7 | 33,1 | 0,32 | 97,2 | 0,10 | 0,227 | +3 | +2 | -3,5 |
| 8 | 32,0 | 0,22 | 93,5 | 0,16 | 0,210 | +7 | -4 | -2 |
| 9 | 36,4 | 0,12 | 98,7 | 0,07 | 0,354 | +8,5 | +7 | +5 |

**Ansprüche**

Verfahren zur Herstellung von geschlossenzelligen Schaumstoffen mit hoher Druckfestigkeit durch Extrusion eines Gemisches aus einem Styrolpolymerisat und 8 bis 16 Gew.%, bezogen auf das Styrolpolymerisat, eines Treibmittels sowie gegebenenfalls üblichen Zusatzstoffen, dadurch gekennzeichnet, daß man als Treibmittel ein Gemisch verwendet, welches

a) 2 bis 20 Gew.% Ethylchlorid

b) 2 bis 20 Gew.% Kohlendioxid

c) 20 bis 80 Gew.% Dichlordifluormethan und

d) 10 bis 60 Gew.% Monochlordifluormethan

enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 606 084  (DOW CHEMICAL CO.)<br>* Ansprüche *<br>--- | 1 | C 08 J   9/14<br>C 08 L  25/00 |
| A | US-A-4 312 910  (K.W. SUH et al.)<br>* Anspruch 1; Spalte 3, Zeile 34 -<br>Spalte 5, Zeile 44 *<br>--- | 1 | |
| A | US-A-4 451 417  (H. AKIYAMA et al.)<br>* Anspruch 1 *<br>--- | 1 | |
| A | US-A-3 066 106  (W.J. McMILLAN et al.)<br>* Anspruch; Seite 2, Zeilen 15-32 *<br>----- | | |

RECHERCHIERTE SACHGEBIETE (Int. Cl.4)

C 08 J

Der vorliegende Recherchenbericht wurde für alle Patentansprüche erstellt

| Recherchenort | Abschlußdatum der Recherche | Prüfer |
|---|---|---|
| DEN HAAG | 06-09-1988 | HALLEMEESCH A.D. |